# EUROPEAN PATENT APPLICATION

(11) **EP 4 600 218 A1**
(43) Date of publication of application: **13.08.2025**
(21) Application number: 24826949.0
(22) Date of filing: 18.07.2024
(51) Int. Cl.: C01G 53/00, H01M 4/505

(54) **SINGLE-CRYSTAL TERNARY POSITIVE ELECTRODE MATERIAL AND PREPARATION METHOD THEREFOR**

(30) Priority: 22.12.2023 CN 202311783406
(71) Applicant: Nantong Reshine New Material Co., Ltd., Nantong, Jiangsu 226010 (CN)
(72) Inventor: ZHANG, Lei, Nantong, Jiangsu 226010 (CN); ZHAO, Yunhu, Nantong, Jiangsu 226010 (CN); QIN, Jin, Nantong, Jiangsu 226010 (CN); ZHANG, Xinlong, Nantong, Jiangsu 226010 (CN)
(74) Representative: Metida
(86) International application number: PCT/CN2024/106193
(87) International publication number: WO 2025/130012

(57) **Abstract**

A single crystal ternary positive electrode material and a method for preparing the same are disclosed, which belong to materials of lithium-ion battery. The method includes: firstly, mix a first lithium source with a single crystal ternary precursor, which are subjected to a first low-temperature sintering stage to form a first sintered material; secondly, mix a second lithium source with the first sintered material, which are subjected to a second low-temperature sintering stage to form a second sintered material; thirdly, subject the second sintered material to a high-temperature sintering and obtain the single crystal ternary positive electrode material. Wherein the first lithium source is lithium carbonate, the temperature of the first sintering stage, the second sintering stage and the high-temperature sintering stage are respectively 600°C ~ 800°C, 600°C ~ 800°C and 900°C ~ 1000°C. Lithium carbonate is used as the first lithium source, and the sintering process is divided into three stages to make the lithium carbonate react more fully with the precursor, which is beneficial to avoiding the disadvantage of low activity of lithium carbonate and reducing the alkali content of the ternary cathode material.

## Description

### CROSS-REFERENCE TO RELATED APPLICATIONS

The application claims priority to Chinese Patent Application No. 202311783406.7 filed on December 22, 2023, with the patent name "single crystal ternary positive electrode material and a method for preparing the single crystal ternary positive electrode material", filed in China National Intellectual Property Administration, the contents of which are incorporated by reference herein.

### FIELD

The disclosure relates to positive electrode materials of the lithium-ion batteries, and more particularly, to a single crystal ternary positive electrode material and a method for preparing the single crystal ternary positive electrode material.

### BACKGROUND

The positive electrode materials of lithium-ion batteries are prepared by sintering of a precursor and a lithium source at a high temperature. The main lithium sources include lithium hydroxide and lithium carbonate. The price of lithium carbonate is lower than that of lithium hydroxide, which can reduce the cost of the positive electrode material. However, lithium hydroxide is still mainly used as the lithium source for preparing ternary positive electrode material currently. The main reason is that lithium hydroxide has high activity, which is more easily to react with the precursor and has high production capacity. Furthermore, the positive electrode material particles are uniform. While lithium carbonate has low activity and reacts unevenly with the precursor, resulting in high alkali content and poor particle uniformity of the positive electrode material.

### SUMMARY

The main technical problem addressed by the present disclosure is to provide a single crystal ternary positive electrode material and a method for preparing the same. The single crystal ternary positive electrode material with lithium carbonate as the lithium source has low alkali content.

To solve the technical problem mentioned above, in an embodiment, a method for preparing a single crystal ternary positive electrode material is provided according to the present disclosure. The method includes:
mix a first lithium source with a single crystal ternary precursor and perform a first low-temperature sintering stage to form a first sintered material, wherein the first lithium source is lithium carbonate, and the temperature of the first low-temperature sintering stage is 600°C to 800°C;
mix a second lithium source with the first sintered material and perform a second low-temperature sintering stage to form a second sintered material, wherein the sintering temperature of the second low-temperature sintering stage is 600°C to 800°C;
sinter to make the second sintered material undergo a high-temperature sintering stage to obtain the single crystal ternary positive electrode material, wherein a sintering temperature of the high-temperature sintering stage is 900°C to 1000°C.

Wherein, a molar ratio of the first lithium source to the single crystal ternary precursor is (0.6-1):1.

Wherein, a sintering time of the first low-temperature sintering stage is 5h to 15h.

Wherein, a molar ratio of the second lithium source to the first sintered material is (0.03-0.5):1.

Wherein, a sintering time of the second low-temperature sintering stage is 5h to 15h.

Wherein, the second lithium source is lithium carbonate or lithium hydroxide.

Wherein, a sintering time of the high-temperature sintering stage is 5h to 25h.

Wherein, a chemical general formula of the single crystal ternary precursor is NiₓCo_{y}Mn_{1-x-y}(OH)₂, wherein 0.5 ≤x<1, 0<y<0.5, and x+y<1.

Wherein, a particle size D50 of the single crystal ternary precursor is 2µm to 20µm.

In addition, it is also necessary to provide a single crystal ternary positive electrode material prepared by the above method.

The beneficial effects of the present discovery are as follows. The method provided by the present discovery uniformly mixes the first lithium source and the single crystal ternary precursor which are subjected to the first low-temperature sintering stage to obtain the first sintered material. Next, the second-stage lithium source and the first sintered material are uniformly mixed which are subjected to the second low-temperature sintering stage to obtain the second sintered material. Then, the second sintered material is subjected to the high-temperature sintering stage to obtain the single crystal ternary positive electrode material. Wherein, the first lithium source is lithium carbonate. The sintering temperature of the first low-temperature sintering stage is 600°C to 800°C. The sintering temperature of the second low-temperature sintering stage is 600°C to 800°C. The sintering temperature of the high-temperature sintering stage is 900°C to 1000°C. Thus, in the present application, lithium carbonate is used as the first lithium source, and the sintering process for preparing the single crystal ternary positive electrode material is divided into three stages, which can increase the activity of lithium carbonate and cause the reaction between the lithium carbonate and the single crystal ternary precursor to be more sufficient. This is beneficial to avoiding the disadvantages caused by the low activity of lithium carbonate, thereby obtaining the single crystal ternary positive electrode material with a lower alkali content. Moreover, continuous production of the single crystal ternary positive electrode material can be implemented, which is beneficial to improving the production efficiency.

### BRIEF DESCRIPTION OF THE DRAWINGS

Implementations of the present technology will now be described, by way of embodiment, with reference to the attached figures. Obviously, the drawings are only some embodiments of the present disclosure. For those of ordinary skill in the art, other drawings can be obtained based on these drawings without creative work.
FIG. 1 is a flowchart of a method for preparing a single crystal ternary positive electrode material according to the present disclosure.
FIG. 2 is a comparison chart showing SEM photos of each comparative example and each embodiment.
FIG. 3 is a comparison chart showing alkali contents of each comparative example and each example.
FIG. 4 is a comparison chart showing rate performance of each comparative example and each example.
FIG. 5 is a comparison chart showing cycle capacity retention rate curves at 45°C of each comparative example and each example.
FIG. 6 is a comparison chart showing DCR data diagrams at 20% SOC of each comparative example and each example.

### DETAILED DESCRIPTION OF THE DISCLOSURE

Implementations of the disclosure will now be described clearly and completely, by way of embodiments only, with reference to the drawings. Obviously, the described embodiments are only portions of the embodiments of the present disclosure, rather than all the embodiments. For those of ordinary skill in the art, other embodiments obtained based on these embodiments of the present disclosure without creative work can be in the scope of the present disclosure.

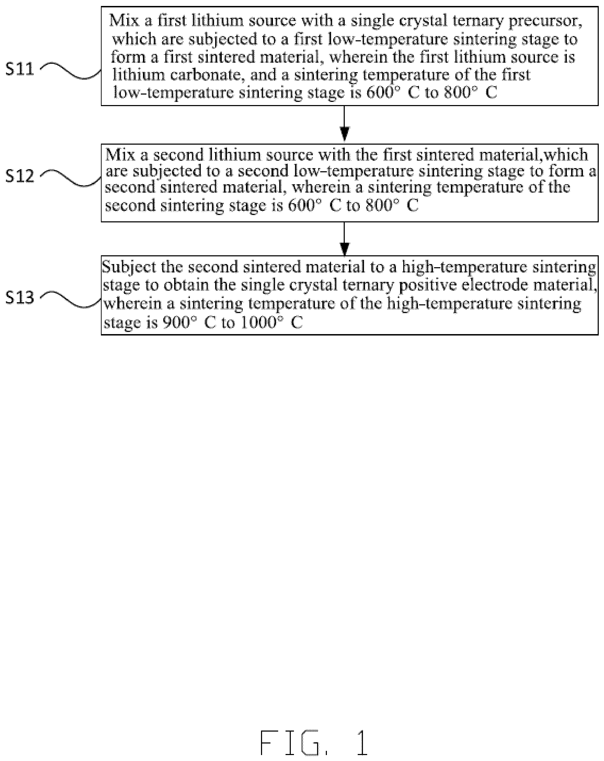

Referring to FIG. 1, and FIG. 1 illustrates a flowchart of a method for preparing a single crystal ternary positive electrode material according to the present disclosure. The method includes the following step S11 to step S13.

Step S11, a first lithium source and a single crystal ternary precursor are uniformly mixed and subjected to a first low-temperature sintering stage to form a first sintered material. The first lithium source is lithium carbonate. The temperature of the first low-temperature sintering stage is 600°C to 800°C.

In this embodiment, the chemical general formula of the single crystal ternary precursor is NiₓCo_{y}Mn_{1-x-y}(OH)₂, wherein 0.5 ≤x<1, 0<y<0.5, and x+y<1. Preferably, a particle size D50 of the single crystal ternary precursor is 2µm to 20µm.

For example, the single crystal ternary precursor may be prepared by the following step a to step d.

Step a, a reaction solution is prepared. A mixed salt solution L1 is prepared according to a molar ratio of Ni: Co: Mn = x: y: (1-x-y). A concentration of metal ions in the salt solution L1 is 0.5 mol/L to 3 mol/L. An alkali solution with a concentration of 1.5 mol/L to 12mol/L and a complexing agent solution with a concentration of 0.5-5mol/L are also prepared. Wherein, the nickel salt solution is selected from a group consisting of sulfate, nitrate, chloride, and any combination thereof. The cobalt salt solution is selected from a group consisting of sulfate, nitrate, chloride, and any combination thereof. The alkali solution is selected from a group consisting of sodium hydroxide, potassium hydroxide, lithium hydroxide, and any combination thereof. The complexing agent is selected from a group consisting of ammonia water, ammonium bicarbonate, ammonium sulfate, ammonium carbonate, citric acid, disodium ethylenediaminetetraacetate, and any combination thereof.

Step b, an initial solution is prepared. Pure water is injected into a reaction container, and the pH value of the solution is adjusted to 8.5 to 13.5 with alkali solution. The temperature in the reaction container is 40 °C to 80 °C. At the same time, inert gas is introduced in the reaction container through the entire reaction process.

Step c, the single crystal ternary precursor is reacted. The mixed salt solution L1 is added into the reaction container, and the flow rate of the mixed salt solution L1 is 5 L/min to 30 L/min. At the same time, an appropriate amount of the complexing agent and the alkali solution are slowly added into the reaction container. The temperature in the reaction container is 40 °C to 80 °C, and the stirring speed is 120 r/min to 950 r/min.

Step d, solid-liquid separation is performed. A reaction product obtained by step c is subjected to a surface treatment to form a mixture which includes the single crystal ternary precursor. Then, the mixture is transferred into a maturation tank for solid-liquid separation. The mixture in the maturation tank is washed with deionized water and dried to obtain the single crystal ternary precursor which has a chemical general formula as NiₓCo_{y}Mn_{1-x-y}(OH)₂.

At least one metal selected from a group consisting of Mg, Al, Zr, Ti, Er, Sr, Nd, Y and W can be doped in the single crystal ternary precursor to improve the structural stability of the single crystal ternary precursor. The metal mentioned above may exist in forms of oxides, halides, hydroxides, metal organics, nitrates, sulfates, carbonates, phosphates, oxalates, composite oxides, or metal fluorides.

In this embodiment, a molar ratio of the first lithium source to the single crystal ternary precursor is (0.6-1):1, such as 0.6:1, 0.7:1, 0.8:1, 0.9:1, and 1:1. Most of the required lithium is added during the first low-temperature sintering stage. In this embodiment, the sintering temperature of the first low-temperature sintering stage is 600 °C to 800 °C, such as 600 °C, 650 °C, 700 °C, 750 °C and 800 °C, etc. The sintering time of the first low-temperature sintering stage is 5h to 15h, such as 5h, 8h, 10h, 12h, and 14h. After sintering, cooling of the single crystal ternary precursor is performed.

Step S12, a second lithium source and the first sintered material are uniformly mixed and subjected to a second low-temperature sintering stage to obtain a second sintered material. The sintering temperature of the second sintering stage is 600 °C to 800 °C.

A molar ratio of the second lithium source to the first sintered material is (0.03- 0.5):1, such as 0.03:1, 0.06:1, 0.1:1, 0.2:1, 0.3:1, 0.4:1, and 0.5:1. In this embodiment, the sintering temperature of the second low-temperature sintering stage is 600 °C to 800 °C, such as 600 °C, 650 °C, 700 °C, 750 °C, and 800 °C. The sintering time of the second low-temperature sintering stage is 5h to 15h, such as 5h, 8h, 10h, 12h, and 14h. After sintering, cooling of the second sintered material is performed. Wherein, the second lithium source is lithium carbonate, lithium hydroxide, and a combination thereof.

Step S13: the second sintered material is subjected to a high-temperature sintering stage to obtain the single crystal ternary positive electrode material. The sintering temperature of the high-temperature sintering stage is 900 °C to 1000 °C.

After the two low-temperature sintering stages, the second sintered material is subjected to the high-temperature sintering stage at 900 °C to 1000 °C, such as 900 °C, 920 °C, 940 °C, 960 °C, and 980 °C. The sintering time of the high-temperature sintering stage is 5h to 25h, such as 5h, 8h, 10h, 15h, 20h, and 25h. After sintering, conventional post-treatments such as cooling, crushing, and iron removal by sieving are performed to obtain the single crystal ternary positive electrode material.

In this embodiment, the lithium carbonate with lower cost is mainly used as the lithium source. The single crystal ternary positive electrode material is prepared by separately adding the lithium sources and two low-temperature sintering stages. Thus, the alkali content of the single crystal ternary cathode material is reduced, and the particles uniformity, the electrochemical performance, and the high-temperature performance are improved. Thus, the performance of the single crystal ternary positive electrode material in the present disclosure can reach the same level as that of the single crystal ternary positive electrode material prepared by lithium hydroxide as the lithium source.

Based on the same invention concept, a single crystal ternary positive electrode material is further provided according to the present disclosure. The single crystal ternary positive electrode material is prepared by the method of the above embodiment. This embodiment has the same beneficial effects as the above embodiment and will not be repeated here.

Based on the same invention concept, a lithium-ion battery is further provided according to the present disclosure. The lithium-ion battery includes the single crystal ternary positive electrode material mentioned in the above embodiment. Of course, the lithium-ion battery further includes a negative electrode material, a separator, and an electrolyte that disclosed in the related arts. The lithium-ion battery has the same beneficial effects as the above embodiment and will not be repeated here.

The following examples and comparative examples are used to illustrate the performance improvement in the technical solution according to the present disclosure.

A ternary positive electrode material was prepared according to the following steps and recorded as Comparative Example 1.

Step 1, a single crystal ternary precursor was prepared. A mixed salt solution L1 was prepared according to the molar ratio of Ni: Co: Mn = 0.70: 0.10: 0.20. The concentration of metal ions in the salt solution L1 was 1.5 mol/L. The alkali solution with a concentration of 1.5 mol/L and the complexing agent solution with a concentration of 0.5 mol/L were prepared. Pure water was injected into the reaction container and the pH value of the solution was adjusted to 11.5 with alkali solution. The temperature in the reaction container was adjusted to 40°C, and the rotation speed was adjusted to 200 r/min. At the same time, nitrogen was introduced in the reaction container. The mixed salt solution L1 was added into the reaction container and the flow rate of the mixed salt solution L1 was 5 L/min. At the same time, an appropriate amount of the complexing agent and the alkali solution were added into the reaction container slowly. When the particle size meets the requirements, solid-liquid separation and drying were subjected to obtain the required single crystal ternary precursor S1.

Step 2. a ternary positive electrode material was prepared. Lithium hydroxide, the single crystal ternary precursor S1 and aluminum hydroxide were mixed. The molar ratio of the precursor to lithium hydroxide was n_{(Li)}/n_{(Me)} = 1.05. Then the mixture was sintered at a sintering temperature of 910 °C for 8 hours. Oxygen was introduced during the sintering process. The sintered material was processed by processes such as crushing, grading, and iron removal to obtain the ternary positive electrode material of Comparative Example 1.

A single crystal ternary positive electrode material was prepared according to the following steps and recorded as Comparative Example 2.

Step 1. the single crystal ternary precursor S1 was prepared according to the step 1 of Comparative Example 1.

Step 2. a single crystal ternary positive electrode material wea prepared. Lithium carbonate, the ternary precursor S1 and aluminum hydroxide were mixed. The molar ratio of the precursor to lithium carbonate was n_{(Li)}/n_{(Me)} = 1.05. Then the mixture was sintered at a sintering temperature of 910 °C for 8 hours. Oxygen was introduced during the sintering process. The sintered material was processed by processes such as crushing, grading, and iron removal to obtain the single crystal ternary positive electrode material recorded of Comparative Example 2.

A single crystal positive electrode material was prepared according to the following steps and is recorded as Example 1.

Step 1. the ternary precursor S1 was prepared according to the step 1 of Comparative Example 1.

Step 2. a single crystal ternary positive electrode material was prepared. Lithium carbonate, the ternary precursor S1 and aluminum hydroxide were mixed to form a first mixture. The molar ratio of the precursor to lithium carbonate was n_{(Li)}/n_{(Me)} = 0.8. Then the first mixture is subjected to the first low-temperature sintering stage at a sintering temperature of 750 °C for 10 hours to form the first sintered material. Air was introduced during the first low-temperature sintering stage process.

The first sintered material and lithium carbonate were mixed to form a second mixture. The molar ratio of the first sintered material to lithium carbonate was n_{(Li)}/n_{(Me)} = 0.25. Then the second mixture was subjected to the second low-temperature sintering stage at a sintering temperature of 700 °C for 10 hours to form the second sintered material. Air was introduced during the second low-temperature sintering stage process.

Then, the second sintered material was subjected to the high-temperature sintering stage at a sintering temperature of 910 °C for 8 hours, and oxygen introduced during the sintering process. The sintered material was processed by processes such as crushing, grading, and iron removal to obtain the single crystal ternary positive electrode material of Example 1.

A single crystal positive electrode material was prepared according to the following steps and recorded as Example 2.

Step 1. the ternary precursor S1 was prepared according to the step 1 of Comparative Example 1.

Step 2. a single crystal ternary positive electrode material was prepared. Lithium carbonate, the ternary precursor S1 and aluminum hydroxide were mixed to form a first mixture. The molar ratio of the precursor to lithium carbonate was n_{(Li)}/n_{(Me)} = 0.8. Then the first mixture was subjected to the first low-temperature sintering stage at a sintering temperature of 750 °C for 10 hours to form the first sintered material. Air was introduced during the first low-temperature sintering stage process.

The first sintered material and lithium hydroxide were mixed to form a second mixture. The molar ratio of the first sintered material to lithium hydroxide was n_{(Li)}/n_{(Me)} = 0.25. Then the second mixture was subjected to the second low-temperature sintering stage at a sintering temperature of 700 °C for 10 hours to form the second sintered material. Air was introduced during the second low-temperature sintering stage process.

Then, the second sintered material was subjected to the high-temperature sintering stage at a sintering temperature of 910 °C for 8 hours, and oxygen introduced during the sintering process. The sintered material was processed by processes such as crushing, grading, and iron removal to obtain the single crystal ternary positive electrode material of Example 1.

The difference between Example 1 and Example 2 is that the lithium sources in the second low-temperature sintering stage were different. In Example 1, the lithium source was lithium carbonate, and in Example 2, the lithium source was lithium hydroxide.

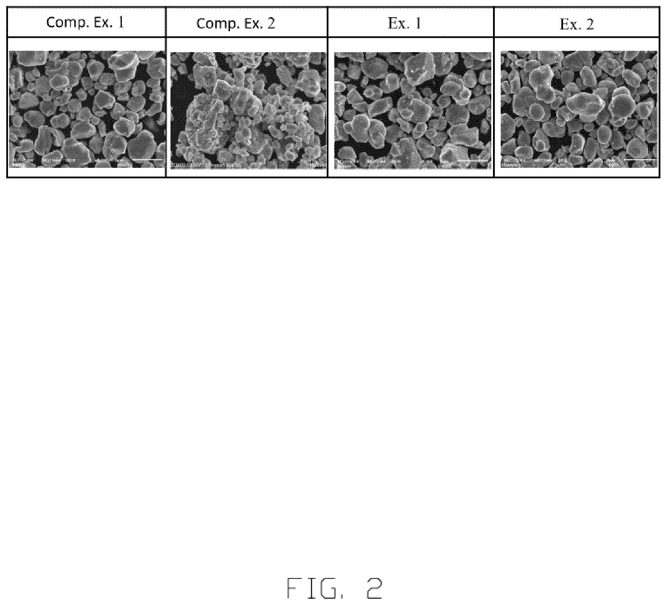

The SEM photos of each Comparative Example and each Example are shown in Fig. 2. It can be seen that, in Comparative Example 2, after mixing the single crystal ternary precursor and lithium carbonate, the mixture was directly subjected to one-time sintering, so that single crystal material cannot be sintered. And the particle morphology of the ternary positive electrode material of Comparative Example 2 is poor. The particles morphology of the single crystal ternary positive electrode materials of Example 1 and Example 2 can reach that of the single crystal ternary positive electrode material of Comparative Example 1 using lithium hydroxide as the lithium source. The single crystal ternary positive electrode materials of Example 1 and Example 2 can form single crystals with good morphology.

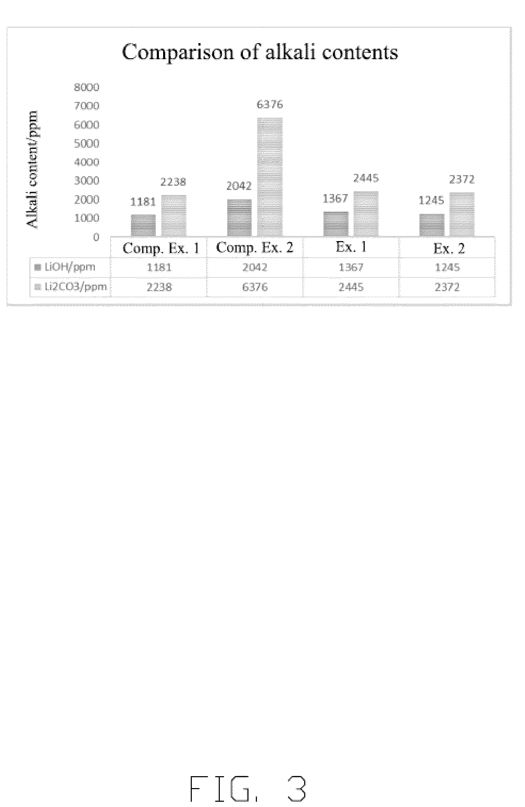

The alkali content comparison charts of each Comparative Example and each Example are shown in Fig. 3. It can be seen that, the alkali content of ternary positive electrode material of Comparative Example 2 is significantly higher than that of Comparative Example 1, Example 1 and Example 2. It can be inferred that material performance of the ternary positive electrode material of Comparative Example 2 will be significantly worse than that of Examples 1 and Example 2. The alkali content of the single crystal ternary positive electrode materials of Example 1 and Example 2 are at the same level as that of Comparative Example 1.

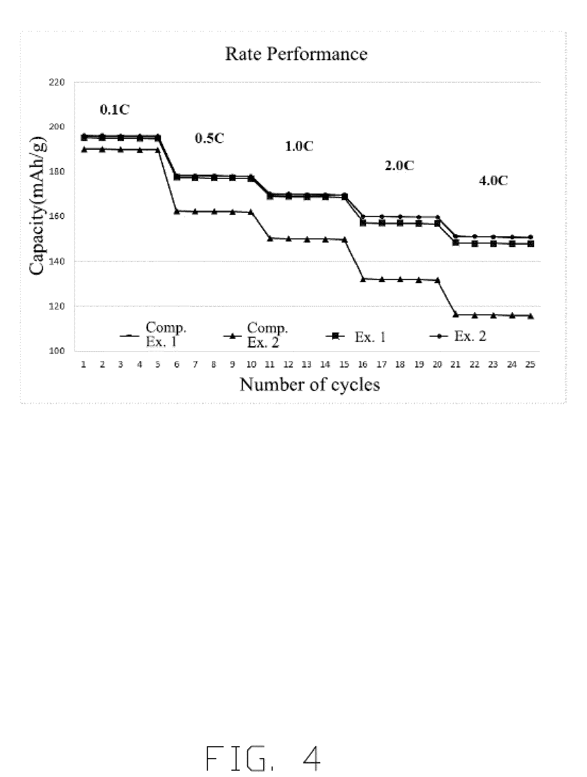

The rate performance comparison curves of each Comparative Example and each Example are shown in Fig. 4. It can be seen that, the capacity and rate of the ternary positive electrode material of Comparative Example 2 are significantly worse. The capacity and rate of the single crystal ternary positive electrode materials of Example 1 and Example 2 are comparable to that of Comparative Example 1.

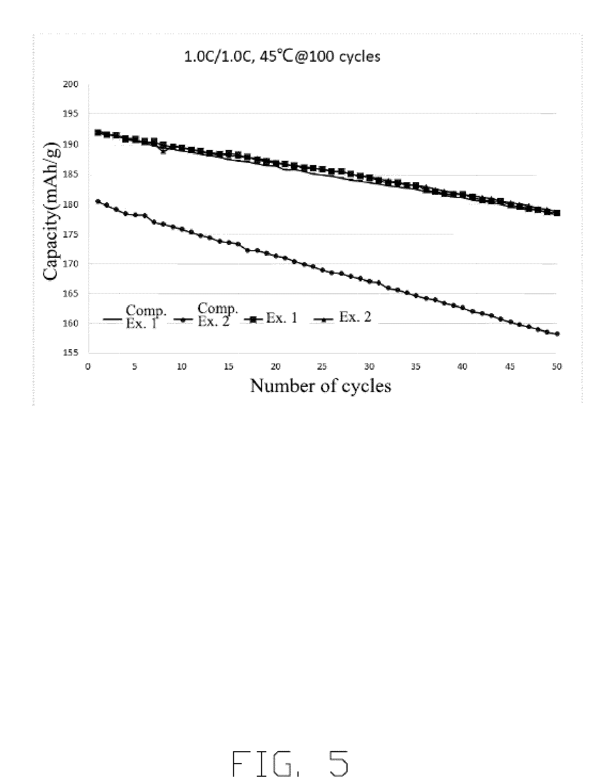

The cycle capacity retention rate curves at 45°C of each Comparative Example and each Example are shown in Fig. 5. It can be seen that, the cycle performance of the ternary positive electrode material of Comparative Example 2 is significantly worse. The cycle performance of the single crystal ternary positive electrode materials of Example 1 and Example 2 are comparable to that of Comparative Example 1.

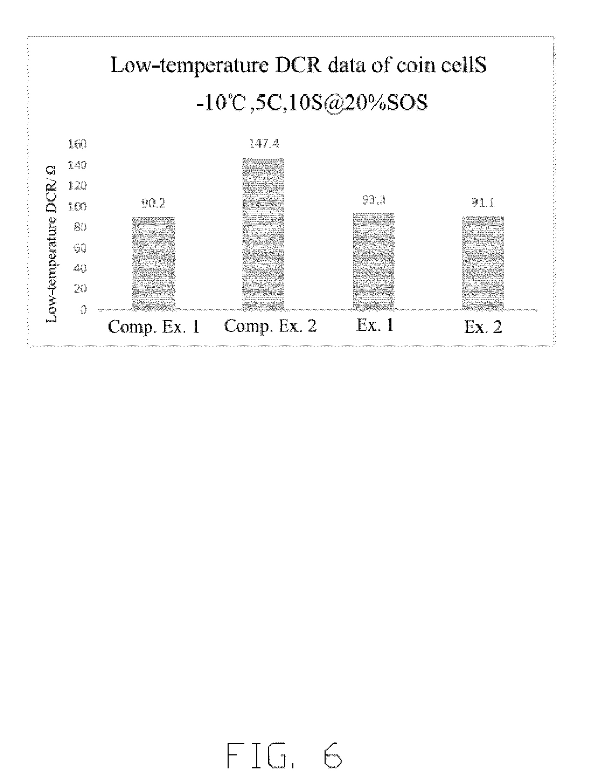

The DCR data diagram at 20% SOC of each Comparative Example and each Example are shown in Fig. 6. It can be seen that, the low-temperature DCR performance of a coin cell with the ternary positive electrode material of Comparative Example 2 is significantly worse. The low-temperature DCR performance of coin cells with the single crystal ternary positive electrode materials of Example 1 and Example 2 are comparable to that of Comparative Example 1.

The disclosure is illustrative only, which may not limit the patent scope of the present discovery. Those skilled in the art can make other changes and modifications according to the technical idea of the present disclosure, or directly or indirectly applied the art in other related technical fields, all such changes, modifications and applications fall within the protective scope of the claims of the present disclosure.

## Claims

1. A method for preparing a single crystal ternary positive electrode material, **characterized in that**, comprising:
mixing a first lithium source with a single crystal ternary precursor, which are subjected to a first low-temperature sintering stage to form a first sintered material, wherein the first lithium source is lithium carbonate, and a sintering temperature of the first low-temperature sintering stage is 600°C to 800°C;
mixing a second lithium source with the first sintered material, which are subjected to a second low-temperature sintering stage to form a second sintered material, wherein a sintering temperature of the second sintering stage is 600°C to 800°C; and
subjecting the second sintered material to a high-temperature sintering stage to obtain the single crystal ternary positive electrode material, wherein a sintering temperature of the high-temperature sintering stage is 900°C to 1000°C.

2. The method of claim 1, **characterized in that**, a molar ratio of the first lithium source to the single crystal ternary precursor is (0.6-1):1.

3. The method of claim 1, **characterized in that**, a sintering time duration of the first low-temperature sintering stage is 5h to 15h.

4. The method of claim 1, **characterized in that**, a molar ratio of the second lithium source to the first sintered material is (0.03-0.5):1.

5. The method of claim 4, **characterized in that**, a sintering time duration of the second low-temperature sintering stage is 5h to 15h.

6. The method of claim 1, **characterized in that**, the second lithium source is lithium carbonate or lithium hydroxide.

7. The method of claim 1, **characterized in that**, a sintering time of the high-temperature sintering stage is 5h to 25h.

8. The method of claim 1, **characterized in that**, a chemical general formula of the single crystal ternary precursor is NiₓCo_{y}Mn_{1-x-y}(OH)₂, wherein 0.5≤x<1, 0<y<0.5, and x+y<1.

9. The method of claim 8, **characterized in that**, a particle size D50 of the single crystal ternary precursor is 2µm to 20µm.

10. A single crystal ternary positive electrode material prepared by the method of any one of claims 1-9.
